# EUROPÄISCHE PATENTSCHRIFT

(11) **EP 1 014 106 B1**
(45) Veröffentlichungstag und Bekanntmachung des Hinweises auf die Patenterteilung: **02.04.2003**
(21) Anmeldenummer: 99124757.8
(22) Anmeldetag: 13.12.1999
(51) Int. Cl.: G01S 7/03

(54) **Einparkhilfe**
Parking-aid device
Dispositif pour faciliter le stationnement

(30) Priorität: 23.12.1998 DE 19859999
(43) Veröffentlichungstag der Anmeldung: 28.06.2000
(73) Patentinhaber: SIEMENS AKTIENGESELLSCHAFT, 80333 München (DE)
(72) Erfinder: Haupt, Günter, 93055 Regensburg-Keilberg (DE)

(56) Entgegenhaltungen:
- EP-A- 0 660 135
- DE-A- 4 412 770
- DE-A- 19 714 578
- DE-A- 19 755 607

## Beschreibung

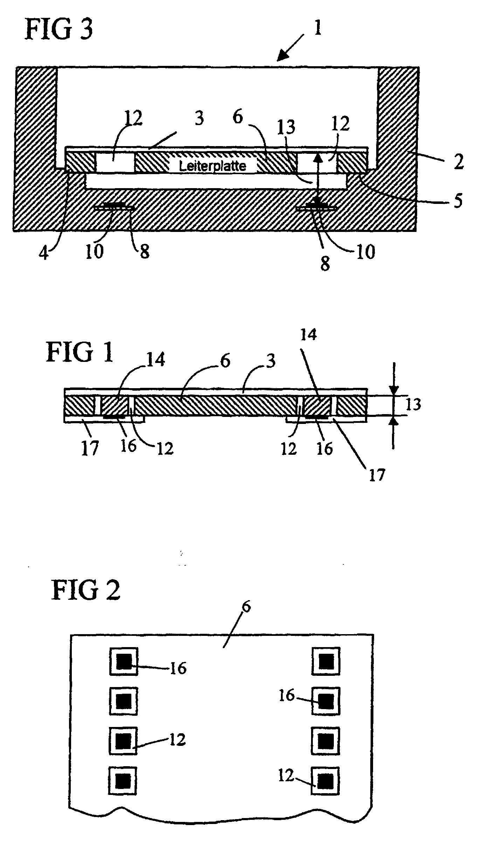

Die Erfindung betrifft eine Einrichtung zum Erfassen von Hindernissen beim Einparken oder Wenden eines Kraftfahrzeugs (Einparkhilfe) nach dem Oberbegriff von Anspruch 1. Eine derartige, aus der Praxis bekannte, Einrichtung (vgl. Figur 3) weist eine im Bereich mindestens einer Stoßstange angeordnete Sende- und Empfangseinrichtung für elektromagnetische Strahlung auf, die eine auf einer ersten Leiterplatte angeordnete HF-Schaltungsanordnung und mindestens zwei mit dieser Schaltungsanordnung verbundene flächige Antennen einschließt.

In der Patentschrift DE 32 44 358 C2 sind der Zweck und die möglichen Anbringungsorte einer solchen Einparkhilfe (dort auch als Rangierhilfe bezeichnet) im einzelnen beschrieben.

Bedient sich die Einparkhilfe hochfrequenter elektromagnetischer Strahlung, so ist die genaue räumliche Lage von flächenförmigen Antennenelementen - sogenannten Antennen-Patches - von großer Bedeutung, da diese Patches und der Patchabstand die Richtcharakteristik und die Strahlcharakteristik der hochfrequenten (HF-) Strahlung bestimmen.

Bei der aus der Praxis bekannten Einparkhilfe sind die Antennen-Patches zusammen mit einer sie tragenden Folie in die Kunststoffmasse des Gehäuses der Einparkhilfe eingebettet. Damit läßt sich für den Abstand zu dem Antennenpatch im günstigsten Fall eine Toleranz von ± 0,3 mm erreichen. Diese Toleranz des Abstandes zwischen der HF-Schaltungsanordnung und den Antennen-Patches führt zu einer störenden Streuung der von der Einparkhilfe beim Annähern an ein Hindernis abgegebenen akustischen Warnsignale.

Der Erfindung liegt das technische Problem zugrunde, die Genauigkeit der Einparkhilfe zu verbessern und die Streuung der einzelnen Exemplare zu verringern.

Dieses Problem wird erfindungsgemäß durch eine Einrichtung mit den Merkmalen von Anspruch 1 gelöst. Zweckmäßige Weiterbildungen sind in den Unteransprüchen niedergelegt.

Ein Ausführungsbeispiel der Erfindung wird im folgenden anhand der Zeichnung erläutert. Es zeigen:
- Figur 1: eine Leiterplatte einer erfindungsgemäßen Einparkhilfe;
- Figur 2: die Leiterplatte nach Figur 1 in einer Ansicht von unten, und
- Figur 3: eine bekannte Einparkhilfe.

Eine bekannte Einparkhilfe 1 (Figur 3) weist ein Gehäuse 2 aus Kunststoff auf, in dessen Innerem eine Leiterplatte 6 untergebracht ist. Zur Fixierung der Lage der Leiterplatte 6 sind in dem Gehäuse 2 seitlich zwei Absätze 4 und 5 vorgesehen. Die Leiterplatte 6 ist zum Beispiel aus dem unter der Bezeichnung FR4 im Handel erhältlichen Kunststoff hergestellt.

Auf der Leiterplatte 6 sitzt eine HF-Schaltungsanordnung, die ihrerseits auf einer Trägerplatte 3 angeordnet ist. Die HF-Schaltungsanordnung ist hier nicht weiter dargestellt, da sie für sich bekannt ist und von der Erfindung nicht berührt wird. Sie erzeugt die auszusendende elektromagnetische Strahlung und empfängt die an Hindernissen reflektierte Strahlung und wertet sie aus. Bei der elektromagnetischen Strahlung handelt es sich um Mikrowellen- oder Radarstrahlung, deren Frequenz z.B. bei 24 GHz und deren Bandbreite bei 1,5 GHz liegt. Die Trägerplatte 3 ist z.B. aus Teflon hergestellt.

In den Kunststoff der Gehäusewand 2 sind Stücke 8 einer Kunststoffolie eingebettet, die kleinformatige flächenförmige Antennenelemente, die sogenannten Antennen-Patches, 10 tragen.

In den Bereichen zwischen der HF-Schaltungsanordnung auf der Trägerplatte 3 und den Antennen-Patches 10 ist die Leiterplatte 6 mit Durchbrüchen 12 versehen, die einen ungehinderten Durchtritt der HF-Strahlung ermöglichen. Der Kunststoff der Gehäusewand 2 ist für die HF-Strahlung durchlässig. Maßgeblich für die genaue Funktion der Einparkhilfe ist der Abstand 13 zwischen der Trägerplatte 3 und den Antennen-Patches 10.

Bei einer erfindungsgemäßen Einparkhilfe sind die Antennen-Patches 10 nicht in die Gehäusewand eingebettet, sondern an der Unterseite der Leiterplatte 6 angebracht. In die Durchbrüche 12 sind hier Distanzstücke 14 eingefügt, deren Längenabmessung (in der Zeichnung in vertikaler Richtung) sehr genau hergestellt werden kann.

Antennen-Patches 16 sind auch hier jeweils auf einem Stück Kunststoffolie 17 befestigt, z.B. mit ihr verklebt. Die Folienstücke 17 sind derart auf der Unterseite der Leiterplatte 6 befestigt, daß die Antennen-Patches 16 jeweils an einem Distanzstück 14 anliegen. Die Folienstücke 17 sind selbstklebend ausgeführt und an die Unterseite der Leiterplatte 6 geklebt. Die Distanzstücke 14 können ebenfalls an der Unterseite der Trägerplatte 3 durch Kleben befestigt sein.

Die Distanzstücke 14 sind aus einem strahlungsdurchlässigen und lötbeständigen Werkstoff hergestellt. Sie müssen den Vorgang des Lötens der HF-Schaltungsanordnung auf der Trägerplatte 3 schadlos überstehen.

Die Leiterplatte 6 ist zweckmäßigerweise mit der (in der Zeichnung unten liegenden) Oberfläche der Trägerplatte 3 verklebt.

Die Anordnung der Durchbrüche 12 der Leiterplatte 6 und der Antennen-Patches 16 ist aus Figur 2 ersichtlich, und zwar bei abgenommener Trägerplatte 3.

Dadurch daß die Distanzstücke 14 sehr präzise hergestellt werden können und daß die Antennen-Patches 16 direkt an den Distanzstücken 14 und diese wiederum direkt auf der die HF-Schaltungsanordnung tragenden Trägerplatte 3 anliegen, kann die Toleranz des Abstandes zwischen der HF-Schaltungsanordnung und den Antennen-Patches in etwa um den Faktor 6 verringert werden. Daraus ergibt sich eine viel geringere Exemplarstreuung der erfindungsgemäßen Einparkhilfen.

## Patentansprüche

1. Einrichtung (1) zum Erfassen von Hindernissen beim Einparken oder Wenden eines Kraftfahrzeugs, mit einer Sende- und Empfangseinrichtung für elektromagnetische Strahlung, die eine auf einer ersten Leiterplatte (3) angeordnete HF-Schaltungsanordnung und mindestens zwei mit dieser HF-Schaltungsanordnung zusammenwirkende flächige Antennenelemente (16) einschließt, **dadurch gekennzeichnet,**
- **dass** die Antennenelemente (16) auf einer Kunststoffolie (17) befestigt sind,
- **dass** eine zweite Leiterplatte (6) Durchbrüche (12) für den Durchtritt von Strahlung von der HF-Schaltungsanordnung zu den einzelnen Antennenelementen (16) aufweist ,
- **dass** in die Durchbrüche (12) Distanzstücke (14) präziser Längenausdehnung eingelegt sind, und
- **dass** die Kunststoffolie (17) derart auf die Unterseite der zweiten Leiterplatte (6) geklebt ist, dass die Antennen (17) jeweils an einem Distanzstück (14) anliegen.

2. Einrichtung nach Anspruch 1, **dadurch gekennzeichnet, dass** die Distanzstücke (14) auf die Unterseite der ersten Leiterplatte (3) geklebt sind.

3. Einrichtung nach einem der vorhergehenden Ansprüche, **dadurch gekennzeichnet, daß** die Kunststoffolie (17) selbstklebend ist.

4. Einrichtung nach einem der vorhergehenden Ansprüche, **dadurch gekennzeichnet, dass** die Distanzstücke (14) aus einem strahlungsdurchlässigen und lötbeständigen Werkstoff hergestellt sind.

5. Einrichtung nach einem der vorhergehenden Ansprüche, **dadurch gekennzeichnet, dass** die die HF-Schaltungsanordnung tragende erste Leiterplatte(3) mit der den Antennen (17) gegenüberliegenden Oberfläche der zweiten Leiterplatte (6) verklebt ist.

## Claims

1. Device (1) for detecting obstacles when parking or turning a vehicle, with a transmitter and receiver device for electromagnetic radiation, which includes an HF circuit arrangement located on a first circuit board (3) and at least two flat antenna elements (16) operating in conjunction with this HF circuit arrangement, **characterised in that**,
- the antenna elements (16) are attached to a plastic film (17),
- a second circuit board (6) has holes (12) for the passage of radiation from the HF circuit arrangement to the individual antenna elements (16),
- spacers (14) of precise longitudinal extension are inserted in the holes (12), and
- the plastic film (17) is adhered in such a way to the underside of the second circuit board (6) that each of the antennas (17) is in contact with a spacer (14).

2. Device according to Claim 1, **characterised in that** the spacers (14) are adhered to the underside of the first circuit board (3).

3. Device according to one of the preceding claims, **characterised in that** the plastic film (17) is self-adhesive.

4. Device according to one of the preceding claims, **characterised in that** the spacers (14) are made of a radiation-permeable and solder-resistant material.

5. Device according to one of the preceding claims, **characterised in that** the first circuit board (3) carrying the HF circuit arrangement is adhered to the surface of the second circuit board (6) opposite the antennas (17).

## Revendications

1. Dispositif (1) destiné à détecter des obstacles lors de la mise en stationnement ou du demi-tour d'un véhicule automobile, comportant un dispositif émetteur-récepteur pour rayonnement électromagnétique, dans la zone d'au moins un parechoc, dispositif qui inclut un agencement de circuit HF disposé sur une plaque support (3) et au moins deux éléments d'antenne plats (16), coopérant avec ce circuit HF,
**caractérisé en ce que**
- les éléments d'antenne (16) sont fixés sur une feuille de matière plastique (17),
- une plaque conductrice (6) présente des passages (12) pour le passage de rayonnement de l'agencement de circuit HF vers les éléments d'antenne (16) individuels,
- dans les passages (12), sont insérées des pièces intercalaires (14) présentant une extension longitudinale précise, et
- la feuille de matière plastique (17) est collée sur la face inférieure de la plaque conductrice (6) de telle façon que les antennes (16) reposent chacune contre une pièce intercalaire (14).

2. Dispositif suivant la revendication 1, **caractérisé en ce que** les pièces intercalaires (14) sont collés sur la face inférieure de la plaque support (3).

3. Dispositif suivant l'une des revendications précédentes, **caractérisé en ce que** la feuille de matière plastique (17) est autocollante.

4. Dispositif suivant l'une des revendications précédentes, **caractérisé en ce que** les pièces intercalaires (14) sont réalisées à partir d'un matériau perméable au rayonnement et résistant au brasage.

5. Dispositif suivant l'une des revendications précédentes, **caractérisé en ce que** la plaque support (3) portant l'agencement de circuit HF est collée à la surface supérieure, opposée aux antennes (16), de la plaque conductrice (6) .
